# EUROPEAN PATENT SPECIFICATION

(11) **EP 4 042 027 B1**
(45) Date of publication and mention of the grant of the patent: **13.12.2023**
(21) Application number: 20785957.0
(22) Date of filing: 01.10.2020
(51) Int. Cl.: F16B 13/14

(54) **THREADLIKE PACKAGE**
FADENARTIGE VERPACKUNG
EMBALLAGE FILIFORME

(30) Priority: 11.10.2019 EP 19202760
(43) Date of publication of application: 17.08.2022
(73) Proprietor: Hilti Aktiengesellschaft, 9494 Schaan (LI)
(72) Inventor: SCHAEFFER, Marc, 8852 Altendorf (CH)
(74) Representative: Hilti Aktiengesellschaft Corporate Intellectual Property
(86) International application number: PCT/EP2020/077496
(87) International publication number: WO 2021/069294

(56) References cited:
- FR-A- 1 423 023
- US-A- 4 372 708
- US-A- 4 651 875
- US-A- 4 706 806
- US-B2- 8 920 087

## Description

The invention relates to a package, in particular for being at least partly inserted into a bore, containing components of a hardenable multi-component mass. The invention further relates to a method of using such a package.

Under the name Hilti HVU, mortar cartridges for anchoring anchor rods have been sold. These cartridges comprise a resin container, in which a hardener container is embedded.

US4651875 A describes a mortar cartridge, preferably a glass cartridge, comprising two adjacent resin chambers and a hardener chamber which extends through both resin chambers.

US4706806 A describes another three-chambered cartridge. Two of the chambers are located adjacent to each other and the third chamber surrounds the second chamber.

US8920087 B describes a cartridge comprising four chambers. Three of them, which are arranged in a line, contain resin components. The fourth chamber extends alongside the other three chambers and contains a hardener component.

It is an object of the invention to provide a package containing components of a hardenable multi-component mass that is particularly easy to manufacture, particularly versatile and particularly reliable to use. It is further an object of the invention to provide a method of using such a package that is particularly versatile and particularly reliable.

This object is achieved by a package according to claim 1. Dependent claims refer to preferred embodiments of the invention.

According to the invention, the package comprises a string of capsules that comprises at least three capsules, which are arranged next to each other in threadlike manner, and an envelope, in which the string of capsules is encased, wherein at least one of the capsules is an A-type capsule, which encapsulates a portion of an A-component of the hardenable multi-component mass, and wherein at least one of the capsules is a B-type capsule, which encapsulates a portion of a B-component of the hardenable multi-component mass.

Thus, the components are individually encased in capsules, and these capsules are arranged in a filiform configuration and retained in this configuration by a separate envelope, in which the capsules are embedded. Accordingly, the individual components are arranged next to each other, in juxtaposed manner. Compared with prior art nested arrangements, which can be laborious to produce (in particular when the volumes are small and/or when the outer container is to contain aggregates such as sand), production of the proposed string-like arrangement can be particularly easy. In addition, the proposed configuration allows to cut the packages into smaller string-like thread pieces, which are nevertheless fully functional. Therefore, the unit length and the quantity of mass contained in each unit can be varied in accordance to current needs. In particular, these parameters are not directly linked to the original manufacturing process. Consequently, particularly good versatility can be achieved. Moreover, the proposed arrangement can be particularly robust and flexible.

In particular, the package can be intended to be inserted into a bore in a substrate. It contains components which, when mixed, give a hardenable multi-component mass, such as an epoxy mass. The capsules are juxtaposed to give string of capsules resembling a string of beads. The envelope at least partly surrounds the string of capsules and retains the capsules in their string-like configuration. Preferably, the envelope is flexible to allow bending of the package without breaking. In particular, each of the capsules confines the content contained therein on its own, i.e. the contents of the capsules would not leak out if the envelope was absent or removed. The walls of the capsules are preferably soft and can e.g. consist of a plastic material.

Preferable, the envelope is a tube, more preferably a closed wall tube. Accordingly, the envelope is cylindrical. This can further facilitate manufacturing and/or improve versatility. In particular, the tube can be a circular tube, i.e. a tube having at least circular outer cross-section, which can allow a particularly compact design. Since both the tubular envelope and the string of capsules contained therein are threadlike, the entire package can be a threadlike package.

The string of capsules preferentially extends in parallel to the tube in which it is embedded, i.e. the axis of the string and the axis of the tube extend in parallel. More preferably, these axes coincide.

Advantageously, the envelope can be a heat shrink tube, i.e. a tube, in particular a plastic tube, shrinkable by heating. This can further facilitate manufacturing.

According to another preferred embodiment of the invention, the colouring of the A-type capsule differs from that of the B-type capsule. Preferably, the envelope is transparent. In case that there are several capsules of the respective type, it is particularly preferred that all of the A-type capsules have the same colouring and/or that all of the B-type capsules have the same colouring, wherein the colouring of the A-type capsules differs from that of the B-type capsules. This can facilitate handling of package, in particular if the package is intended to be cut. Transparency of the envelope allows the colouring of the capsules to be detected from outside of the envelope. The colouring of the capsules can be effected by different colouring of the capsule walls or by different colouring of the capsule content.

Advantageously, the volume of the A-type capsule differs from that of the B-type capsule. In case that there are several capsules of the respective type, it is particularly preferred that all of the A-type capsules have the same volume and/or that all of the B-type capsules have the same volume, wherein the volume of the A-type capsules differs from that of the B-type capsules. Providing the respective capsules with different capacities can further facilitate handling by providing means for identifying the different capsules. Furthermore, it can be advantageous with a view to the functioning and manufacture of the components contained therein.

The string of capsules preferentially comprises at least four or at least ten capsules, which are arranged next to each other in threadlike manner. Thus, the string of capsules has a relatively large thread extension. The package and the string of capsules contained therein could be quasi-endless, i.e. could have a very long extension that can be cut into size by the user, or the package could be preconfigured to shorter lengths. For example, the string of capsules could comprise precisely two A-type capsules and precisely two B-type capsules.

Preferably, at least two of the capsules are A-type capsules, which each encapsulate a portion of the A-component of the hardenable multi-component mass, and/or at least two of the capsules are B-type capsules, which each encapsulate a portion of the B-component of the hardenable multi-component mass. In particular, each of the A-type capsules has the same content, namely the A-component of the hardenable multi-component mass, and each of the B-type capsules has the same content, namely the B-component of the hardenable multi-component mass. It is particularly preferred that the string of capsules comprises only A-type capsules and B-type capsule, i.e. no other capsules with other content. This allows for a particularly easy design, in particular if the multi-component mass is a two-component mass.

The mass is preferentially a hardenable two component mass. The A-component is preferably a resin component, comprising a resin of the hardenable multi-component mass, and the B-component is preferably a hardener component, comprising a hardener for curing the resin. Preferentially, the resin component could, in addition to the curable resin, comprise, amongst others, a reactive diluent, an accelerator, an inhibitor, aggregate fillers, and/or other organic or inorganic constituents. Preferentially, the hardener component could, in addition to the hardener, comprise additional organic or inorganic constituents, such as a stabilizer for the hardener. The A-component and/or the B-component are preferably liquids (at 20°C). However, in particular the B-component could also be solid (at 20°C).

The hardenable multi-component mass can in particularly be a mortar, i.e. it can comprise aggregate filler, such as corundum or sand.

According to another preferential embodiment, in at least a section of the string of capsules, A-type capsules and B-type capsules are arranged in a repetitive pattern. More preferably, A-type capsules and B-type capsules are arranged in a repetitive pattern throughout the string of capsules. It is particularly advantageous that in at least a section of the string of capsules, A-type capsules and B-type capsules are arranged in alternating order. More preferably A-type capsules and B-type capsules are arranged in alternating order throughout the string of capsules. Accordingly, the capsules are arranged in sequence A/B/A/B/A/B/... at least in a section of the string of capsules, preferably throughout the string of capsules. This can provide particularly good mixing and/or chemical performance.

The envelope can preferably be in direct contact with at least some of the capsules, more preferably with all of the capsules of the string of capsules. This can further facilitate manufacturing and/or improve handling.

The capsules of the string of capsules are arranged contiguously. Neighbouring capsules could touch each other. Preferably, however, neighbouring capsules are spaced from one another. This can provide particularly good mechanical flexibility and therefore versatility.

The invention also relates to a possible use of the package, in which a thread piece is cut off from the package, and the thread piece is arranged in a bore in a substrate. The thread piece preferentially comprises at least three of the capsules, i.e. it has significant length. The thread piece can be positioned in the borehole after the thread piece has been cut off the package. Alternatively, it is possible to insert the package into the bore before cutting off the thread piece, and to then cut off that end of the package which is located within the borehole to give the thread piece. Cutting can e.g. be performed using a knife or scissors. Thus, a versatile injection system covering different bore depth and setting length can be created. In particular, a virtually endless package can be cut to size by the user according to bore depth.

A fastener, such as a screw, in particular a tapping screw, can preferably be inserted into the bore, thereby rupturing at least some of the capsules contained in the thread piece. The content of the ruptured capsules will mix to give the multi component mass, which will subsequently harden.

Features that are described here in connection with the inventive package can also be used in connection with the inventive method of use and features that are described here in connection with the inventive method of use can also be used in connection with the inventive package.

The following description explains the invention using illustrative embodiments and drawings.

Figure 1 is sectional view of a package.

Figures 2 to 4 are consecutive steps of a method of using the package of figure 1.

The shown package 10 is threadlike and comprises a plurality of capsules 11, namely A-type capsules 11_{A}, which each contain a portion of an A-component of a hardenable multi-component mass, and B-type capsules 11_{B}, which each contain a portion of a B-component of the hardenable multi-component mass 2. Each of the capsules 11 has a capsule wall 15, which, independently, seals off the content of said capsule 11. In particular, the A component is a resin component comprising a resin of the hardenable multi-component mass, and the B component is a hardener component comprising a hardener for hardening the resin. The hardenable mass is thus a two-component mass.

The capsules 11 are arranged next to each other in alternating order A/B/A/B and so forth, forming a string of capsules 11. Thus, an A-type capsule 11_{A}, is followed by a B-type capsule 11_{B}, which is in turn followed by an A-type capsule 11_{A}, and so forth. In other words, except maybe for the end regions, each B-type capsule 11_{B} is located between two A-type capsules 11_{A}. The string of capsules 11 is held in a filiform configuration by means of a tubular envelope 16, which surrounds and retains the capsules 11. The tubular envelope 16 is in direct contact with the capsules 11, whereas adjacent capsules 11 have some spacing in between. This clearance can assist flection of the package 10.

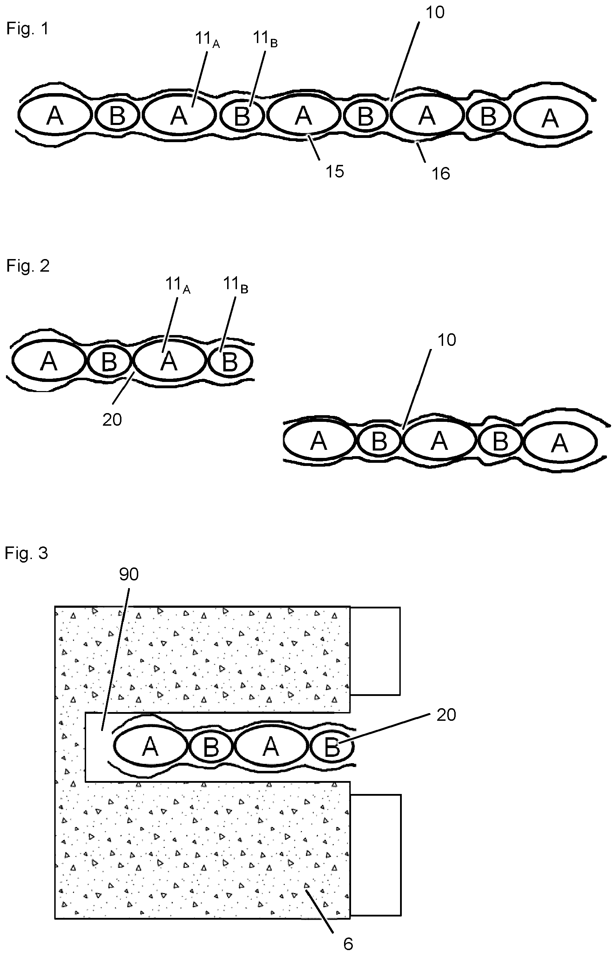

In use, a thread piece 20 is separated from the package 10. In the present example, the thread piece 20 comprises four capsules 11, two of them A-type and the remaining two B-type. The resulting configuration is shown in figure 2.

The thread piece 20 is then located in a bore 90 in a substrate 6, for example a concrete substrate, resulting in the configuration shown in figure 3.

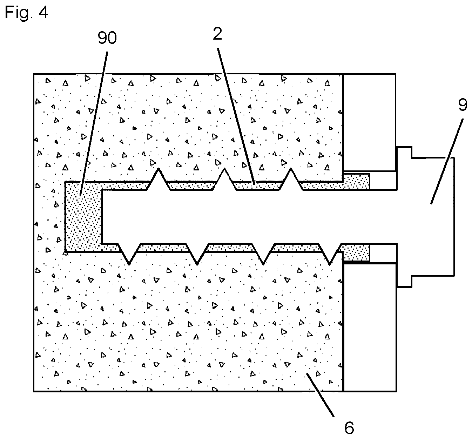

Afterwards, a fastener 9, for example a concrete tapping screw, is inserted into the bore 90. The fastener 9 thereby ruptures the capsules 11 of the thread piece 20 and mixes their contents to give the hardenable multi-component mass 2, which is left to harden within the bore 90. The resulting configuration is shown in figure 4.

## Claims

1. Package (10) containing components of a hardenable multi-component mass (2), comprising
- a string of capsules (11) that comprises at least three capsules (11), which are arranged next to each other in threadlike manner, and
- an envelope (16), in which the string of capsules (11) is encased,
- wherein at least one of the capsules (11) is an A-type capsule (11_{A}), which encapsulates a portion of an A-component of the hardenable multi-component mass (2), and wherein at least one of the capsules (11) is a B-type capsule (11_{B}), which encapsulates a portion of a B-component of the hardenable multi-component mass (2).

2. Package (10) according to claim 1,
**characterized in that**
the envelope (16) is a closed-wall tube, and
the string of capsules (11) extends in parallel to the tube.

3. Package (10) according to any one of the preceding claims,
**characterized in that**
the envelope (16) is a heat shrink tube.

4. Package (10) according to any one of the preceding claims,
**characterized in that**
the colouring of the A-type capsule (11_{A}) differs from that of the B-type capsule (11_{B}), and
the envelope (16) is transparent.

5. Package (10) according to any one of the preceding claims,
**characterized in that**
the volume of the A-type capsule (11_{A}) differs from that of the B-type capsule (11_{B}).

6. Package (10) according to any one of the preceding claims,
**characterized in that**
the string of capsules (11) comprises at least four or at least ten capsules (11), which are arranged next to each other in threadlike manner.

7. Package (10) according to any one of the preceding claims,
**characterized in that**
at least two of the capsules (11) are A-type capsules (11_{A}), which each encapsulate a portion of the A-component of the hardenable multi-component mass (2), and/or at least two of the capsules (11) are B-type capsules (11_{B}), which each encapsulate a portion of the B-component of the hardenable multi-component mass (2).

8. Package (10) according to any one of the preceding claims,
**characterized in that**
- the A-component is a resin component, comprising a resin of the hardenable multi-component mass (2), and
- the B-component is a hardener component, comprising a hardener for curing the resin.

9. Package (10) according to any one of the preceding claims,
**characterized in that**
the hardenable multi-component mass (2) is a mortar.

10. Package (10) according to any one of the preceding claims,
**characterized in that**
in at least a section of the string of capsules (11), A-type capsules (11_{A}) and B-type capsules (11_{B}) are arranged in a repetitive pattern.

11. Package (10) according to any one of the preceding claims,
**characterized in that**
in at least a section of the string of capsules (11), A-type capsules (11_{A}) and B-type capsules (11_{B}) are arranged in alternating order.

12. Package (10) according to any one of the preceding claims,
**characterized in that**
the envelope (16) is in direct contact with at least some of the capsules (11).

13. Package (10) according to any one of the preceding claims,
**characterized in that**
neighbouring capsules (11) are spaced from one another.

14. Method of using a package (10) according to any one of the preceding claims, in which
- a thread piece (20) is cut off from the package (10), and
- the thread piece (20) is arranged in a bore (90) in a substrate (6).

15. Method according to claim 14,
**characterized in that**
a fastener (9) is inserted into the bore (90), thereby rupturing at least some of the capsules (11) contained in the thread piece (20).

## Patentansprüche

1. Gehäuse (10), das Komponenten einer härtbaren Mehrkomponentenmasse (2) enthält, umfassend
- eine Kette von Kapseln (11), die mindestens drei Kapseln (11) umfasst, die nebeneinander gewindeartig angeordnet sind, und
- eine Hülle (16), in der die Kette von Kapseln (11) ummantelt ist,
- wobei mindestens eine der Kapseln (11) eine A-Typ-Kapsel (11_{A}) ist, die einen Abschnitt einer A-Komponente der härtbaren Mehrkomponentenmasse (2) einkapselt, und wobei mindestens eine der Kapseln (11) eine B-Typ Kapsel (11_{B}) ist, die einen Abschnitt einer B-Komponente der härtbaren Mehrkomponentenmasse (2) einkapselt.

2. Gehäuse (10) nach Anspruch 1,
**dadurch gekennzeichnet, dass**
die Hülle (16) ein Schlauch mit geschlossener Wand ist und
sich die Kette von Kapseln (11) parallel zu dem Schlauch erstreckt.

3. Gehäuse (10) nach einem der vorstehenden Ansprüche,
**dadurch gekennzeichnet, dass**
die Hülle (16) ein Wärmeschrumpfschlauch ist.

4. Gehäuse (10) nach einem der vorstehenden Ansprüche,
**dadurch gekennzeichnet, dass**
sich die Färbung der A-Typ-Kapsel (11_{A}) von der der B-Typ-Kapsel (11_{B}) unterscheidet und
die Hülle (16) transparent ist.

5. Gehäuse (10) nach einem der vorstehenden Ansprüche,
**dadurch gekennzeichnet, dass**
sich das Volumen der A-Typ-Kapsel (11_{A}) von dem der B-Typ-Kapsel (11_{B}) unterscheidet.

6. Gehäuse (10) nach einem der vorstehenden Ansprüche,
**dadurch gekennzeichnet, dass**
die Kette von Kapseln (11) mindestens vier oder mindestens zehn Kapseln (11) umfasst, die nebeneinander gewindeartig angeordnet sind.

7. Gehäuse (10) nach einem der vorstehenden Ansprüche,
**dadurch gekennzeichnet, dass**
mindestens zwei der Kapseln (11) A-Typ Kapseln (11_{A}) sind, die jeweils einen Abschnitt der A-Komponente der härtbaren Mehrkomponentenmasse (2) einkapseln, und/oder mindestens zwei der Kapseln (11) B-Typ Kapseln (11_{B}) sind, die jeweils einen Abschnitt der B-Komponente der härtbaren Mehrkomponentenmasse (2) einkapseln.

8. Gehäuse (10) nach einem der vorstehenden Ansprüche,
**dadurch gekennzeichnet, dass**
- die A-Komponente eine Harzkomponente ist, umfassend ein Harz der härtbaren Mehrkomponentenmasse (2) und
- die B-Komponente eine Härtungskomponente ist, umfassend einen Härter zum Aushärten des Harzes.

9. Gehäuse (10) nach einem der vorstehenden Ansprüche,
**dadurch gekennzeichnet, dass**
die härtbare Mehrkomponentenmasse (2) ein Mörtel ist.

10. Gehäuse (10) nach einem der vorstehenden Ansprüche,
**dadurch gekennzeichnet, dass**
in mindestens einem Abschnitt der Kette von Kapseln (11), A-Typ Kapseln (11_{A}) und B-Typ-Kapseln (11_{B}) in einem sich wiederholenden Muster angeordnet sind.

11. Gehäuse (10) nach einem der vorstehenden Ansprüche,
**dadurch gekennzeichnet, dass**
in mindestens einem Abschnitt der Kette von Kapseln (11), A-Typ Kapseln (11_{A}) und B-Typ-Kapseln (11_{B}) in abwechselnder Reihenfolge angeordnet sind.

12. Gehäuse (10) nach einem der vorstehenden Ansprüche,
**dadurch gekennzeichnet, dass**
die Hülle (16) in direktem Kontakt mit mindestens einigen der Kapseln (11) steht.

13. Gehäuse (10) nach einem der vorstehenden Ansprüche,
**dadurch gekennzeichnet, dass**
angrenzende Kapseln (11) voneinander beabstandet sind.

14. Verfahren zum Verwenden eines Gehäuses (10) nach einem der vorstehenden Ansprüche, wobei
- ein Gewindestück (20) von dem Gehäuse (10) abgeschnitten ist und
- das Gewindestück (20) in einer Bohrung (90) in einem Substrat (6) angeordnet ist.

15. Verfahren nach Anspruch 14,
**dadurch gekennzeichnet, dass**
ein Befestigungselement (9) in die Bohrung (90) eingesetzt ist, wodurch mindestens einige der Kapseln (11), die in dem Gewindestück (20) enthalten sind, brechen.

## Revendications

1. Emballage (10) contenant des composants d'une masse à composants multiples durcissable (2), comprenant
- une chaîne de capsules (11) qui comprend au moins trois capsules (11), qui sont agencées les unes à côté des autres de manière filiforme, et
- une enveloppe (16), dans laquelle est enrobée la chaîne de capsules (11),
- dans lequel au moins l'une des capsules (11) est une capsule de type A (11_{A}), qui encapsule une partie d'une composante A de la masse à composants multiples durcissable (2), et dans lequel au moins l'une des capsules (11) est une capsule de type B (11_{B}), qui encapsule une partie d'un composant B de la masse à composants multiples durcissable (2).

2. Emballage (10) selon la revendication 1,
**caractérisé en ce que**
l'enveloppe (16) est un tube à paroi fermée, et
la chaîne de capsules (11) s'étend parallèlement au tube.

3. Emballage (10) selon l'une quelconque des revendications précédentes,
**caractérisé en ce que**
l'enveloppe (16) est un tube thermorétractable.

4. Emballage (10) selon l'une quelconque des revendications précédentes,
**caractérisé en ce que**
la coloration de la capsule de type A (11_{A}) diffère de celle de la capsule de type B (11_{B}), et l'enveloppe (16) est transparente.

5. Emballage (10) selon l'une quelconque des revendications précédentes,
**caractérisé en ce que**
le volume de la capsule de type A (11_{A}) diffère de celui de la capsule de type B (11_{B}).

6. Emballage (10) selon l'une quelconque des revendications précédentes,
**caractérisé en ce que**
la chaîne de capsules (11) comprend au moins quatre ou au moins dix capsules (11), qui sont agencées les unes à côté des autres de manière filiforme.

7. Emballage (10) selon l'une quelconque des revendications précédentes,
**caractérisé en ce que**
au moins deux des capsules (11) sont des capsules de type A (11_{A}), qui encapsulent chacune une partie de la composante A de la masse à composants multiples durcissable (2) et/ou
au moins deux des capsules (11) sont des capsules de type B (11_{B}), qui encapsulent chacune une partie du composant B de la masse à composants multiples durcissable (2).

8. Emballage (10) selon l'une quelconque des revendications précédentes,
**caractérisé en ce que**
- le composant A est un composant de résine, comprenant une résine de la masse à composants multiples durcissable (2), et
- le composant B est un composant durcisseur, comprenant un durcisseur pour durcir la résine.

9. Emballage (10) selon l'une quelconque des revendications précédentes,
**caractérisé en ce que**
la masse à composants multiples durcissable (2) est un mortier.

10. Emballage (10) selon l'une quelconque des revendications précédentes,
**caractérisé en ce que**
dans au moins une section de la chaîne de capsules (11), des capsules de type A (11_{A}) et des capsules de type B (11_{B}) sont agencées en un motif répétitif.

11. Emballage (10) selon l'une quelconque des revendications précédentes,
**caractérisé en ce que**
dans au moins une section de la chaîne de capsules (11), des capsules de type A (11_{A}) et des capsules de type B (11_{B}) sont agencées en ordre alterné.

12. Emballage (10) selon l'une quelconque des revendications précédentes,
**caractérisé en ce que**
l'enveloppe (16) est en contact direct avec au moins certaines des capsules (11).

13. Emballage (10) selon l'une quelconque des revendications précédentes,
**caractérisé en ce que**
les capsules (11) voisines sont espacées les unes des autres.

14. Procédé d'utilisation d'un emballage (10) selon l'une quelconque des revendications précédentes, dans lequel
- une pièce de fil (20) est coupée de l'emballage (10), et
- la pièce de fil (20) est agencée dans un alésage (90) dans un substrat (6).

15. Procédé selon la revendication 14,
**caractérisé en ce que**
un élément de fixation (9) est inséré dans l'alésage (90), rompant ainsi au moins certaines des capsules (11) contenues dans la pièce de fil (20).
